Europäisches Patentamt

European Patent Office

Office européen des brevets

(11) Veröffentlichungsnummer: **0 328 038**
**A2**

## (12) EUROPÄISCHE PATENTANMELDUNG

(21) Anmeldenummer: 89102064.6

(22) Anmeldetag: 07.02.89

(51) Int. Cl.4: **B01D 29/04** , **B01D 13/00** , **B29C 67/18**

(30) Priorität: 12.02.88 DE 3804344

(43) Veröffentlichungstag der Anmeldung:
16.08.89 Patentblatt 89/33

(84) Benannte Vertragsstaaten:
DE FR GB IT

(71) Anmelder: Sartorius GmbH.
Weender Landstrasse 94-108
D-3400 Göttingen(DE)

(72) Erfinder: Graus, Andreas
Zur Eichenburg 1b
D-3412 Nörten-Hardenberg(DE)
Erfinder: Schützler, Michael
An der Springmühle 11
D-3400 Göttingen(DE)

(74) Vertreter: Köhler, Rudolf
c/o Sartorius GmbH Weender Landstrasse
94-108
D-3400 Göttingen(DE)

(54) Kleinfilter aus Kunststoff und Verfahren zu seiner Herstellung.

(57) Bei einem Kleinfilter mit einem in Spritzgußtechnik gefertigten einteiligen Kunststoffgehäuse (1), in welchem zwischen einem Einlaß (2) und einem Auslaß (3) ein randseitig leckdicht mit dem Gehäuse (1) verbundene Filtermembran (6) angeordnet ist, ist die Filtermembran (6) zumindest einseitig am abzudichtenden Randbereich (6") vom in der Spritzgußform erstarrten Spritzguß überdeckt und in diesem verankert.

Fig. 1

EP 0 328 038 A2

## Kleinfilter aus Kunststoff und Verfahren zu seiner Herstellung

Beschreibung

Die Erfindung betrifft einen Kleinfilter aus Kunststoff mit einem aus Spritzguß gefertigten Gehäuse, in welchem zwischen einem Einlaß und einem Auslaß eine in ihrem Randbereich leckdicht mit dem Gehäuse verbundene Filtermembran angeordnet ist und betrifft gleichzeitig ein Verfahren zur Herstellung eines solchen Kleinfilters aus Kunststoff. Derartige Kleinfilter nach dem Stand der Technik werden vor allen Dingen als Spritzenvorsätze für die Sterilfiltration kleinster Mengen benutzt, wobei die Gesamtlänge des Filtergehäuses zwischen dem Einlaß- und Auslaßende etwa bei 20 mm und die Filterdurchmesser bei etwa 3-5 mm liegen. Die Filtermembran ist dabei auf einer inneren Schulter des Filtergehäuses durch Ultraschallverschweißung, Aufsiegelung oder Klebung verbunden. Die Herstellung dieser Filter ist insofern verbesserungswürdig, als mehrere Arbeitsschritte bis zur Endfertigung des Filters notwendig sind und zwar unter Verwendung der sehr kleinen Einzelteile. Das nachträgliche Positionieren der ausgestanzten Filtermembranen in den fertigen Filtergehäusen und deren leckdichte Verbindung ist sehr schwierig und die Ausschußraten sind entsprechend hoch. Der fertige Filter muß in der Regel einer Sterilisation unterzogen werden.

Es ist zwar bekannt (US-PS 4,113,627), in einem mehrteiligen Filtergehäuse die Filtermembran in mehreren Arbeitsschritten durch flüssigen Kunststoff mit dem fertigen Spritzgußteil aus Kunststoff durch Anspritzen zu verbinden und auch bekannt, die Filtermembran zwischen zwei fertigen Gehäuseteilen aus Kunststoff zu positionieren und alle drei Teile (Gehäuseteile und Filtermembran) gemeinsam in einem Formwerkzeug randseitig mit flüssigem Kunststoff zu umspritzen, jedoch ist diese Fertigung aufgrund der vielen Einzelteile und Fertigungsschritte sehr aufwendig.

Der Erfindung liegt daher die Aufgabe zugrunde, die Herstellung derartiger Kleinfilter, insbesondere die Verbindung der Filtermembran mit dem Gehäuse zu vereinfachen und dabei die leckdichte Verbindung zwischen Filtermembran und Gehäuse zu verbessern.

Diese Aufgabe wird erfindungsgemäß dadurch gelöst, daß das Gehäuse einstückig aufgebaut und die Filtermembran zumindest einseitig am abzudichtenden Randbereich vom in der Spritzgußform erstarrten Spritzguß eines einteiligen Filtergehäuses überdeckt und in diesem verankert ist.

Das Verfahren zur Herstellung erfolgt erfindungsgemäß dadurch, daß die Filtermembran zwischen zwei gegenläufig bewegbaren Formelementen eines Formwerkzeuges in einem Formnest derart beidseitig abgestützt wird, daß der abzudichtende Randbereich der Filtermembran zumindest einseitig freiliegt und vom beim Spritzguß eingebrachten flüssigen Kunststoff überdeckt, in diesem verankert und das verfestigte einstückige Gehäuse mit der integrierten Filtermembran entformt wird. Bevorzugt erfolgt das Einbringen der klein formatigen Filtermembran dadurch, daß diese direkt mittels eines als Stanzwerkzeug ausgebildeten Formteiles von einem Filterband ausgestanzt und dieses Stanzteil direkt im Formwerkzeug positioniert und danach umspritzt wird. Dadurch wird in einem maschinellen Herstellungsschritt die empfindlich Filtermembran aus einem Filterband ausgestanzt, im Formnest positioniert und randseitig leckdicht mit einem Gehäuse umspritzt.

Der Erfindungsgedanke ist in einem bevorzugten Ausführungsbeispiel anhand der beiliegenden Zeichnung näher erläutert. Dabei zeigt:

Fig. 1 einen typischen Kleinfilter im Längsschnitt,

Fig. 2 einen Detailpunkt der im Kunststoff des einteiligen Filtergehäuses verankerten Filtermembran,

Fig. 3 eine Variante zu dieser Verankerung,

Fig. 4 schematisch einen Vertikalschnitt durch das Formwerkzeug in geöffneter Position,

Fig. 5 einen Vertikalschnitt durch das Formwerkzeug in geschlossener Position und

Fig. 6 einen Horizontalschnitt durch das Formwerkzeug in der Position gemäß Fig. 5.

Der Kleinfilter besteht aus einem einteiligen Kunststoffgehäuse 1 mit einem Einlaß 2, einem Auslaß 3 und dem auf einer inneren Schulter 4 im Randbereich 6″ im Kunststoff des Gehäuses 1 verankerten Membranfilter 6. Die Verankerung erfolgt durch den in das Formwerkzeug eingespritzten flüssigen Gehäusekunststoff, der dabei den freiliegenden Randbereich 6″ des Membranfilters 6 je nach Filtermaterial anlöst und sich mit diesem verbindet oder in die Porenstruktur zumindest oberflächlich eindringt und sich in oder auf dieser verankert.

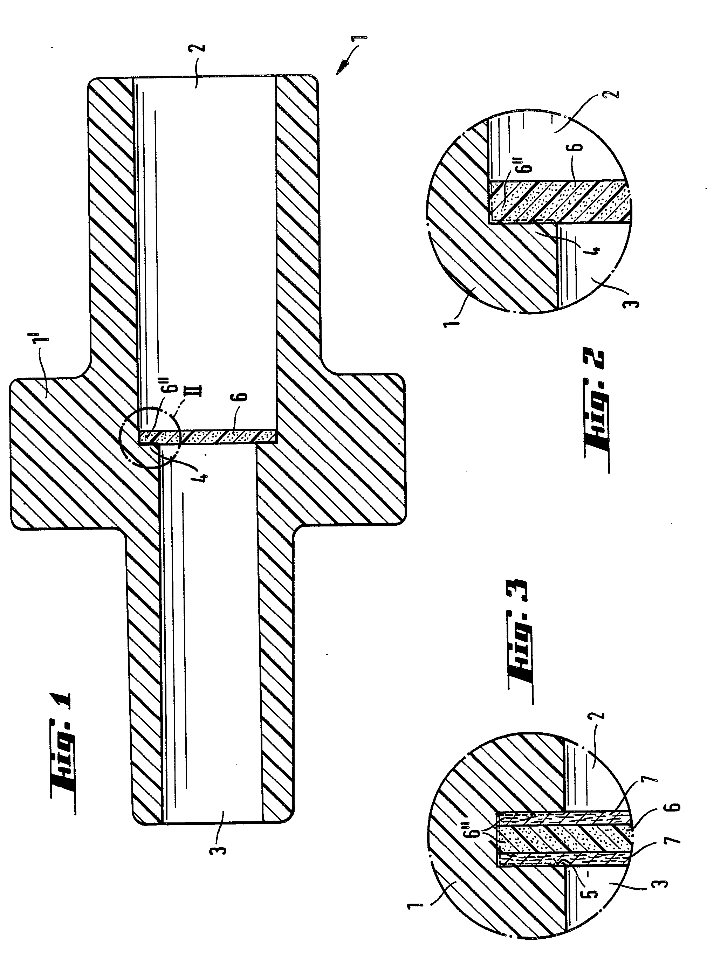

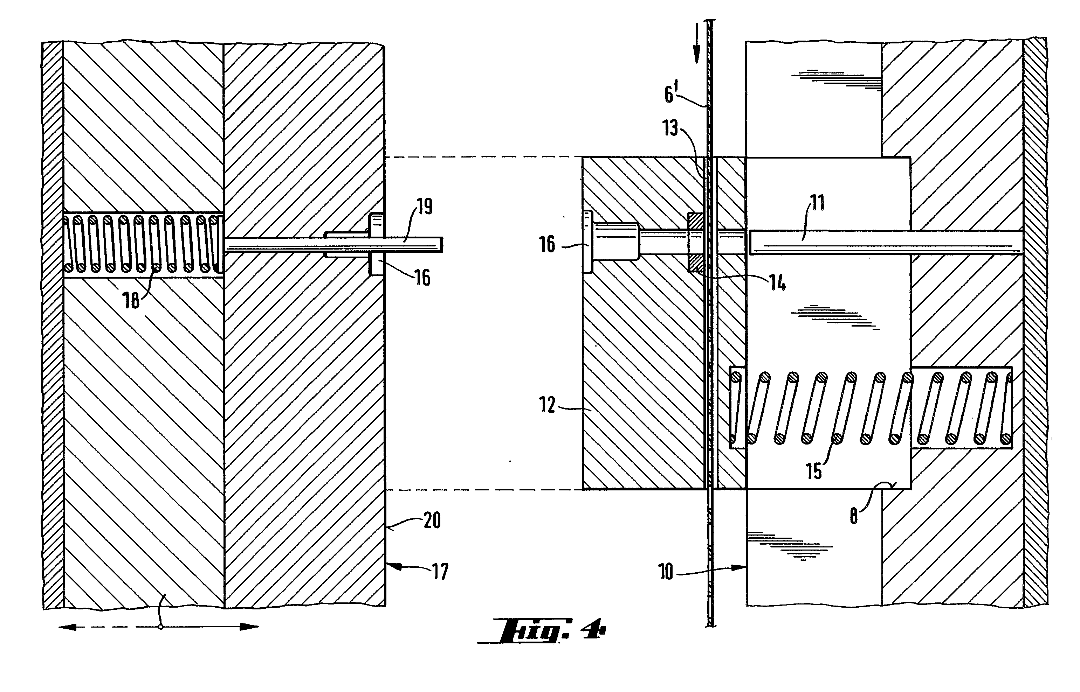

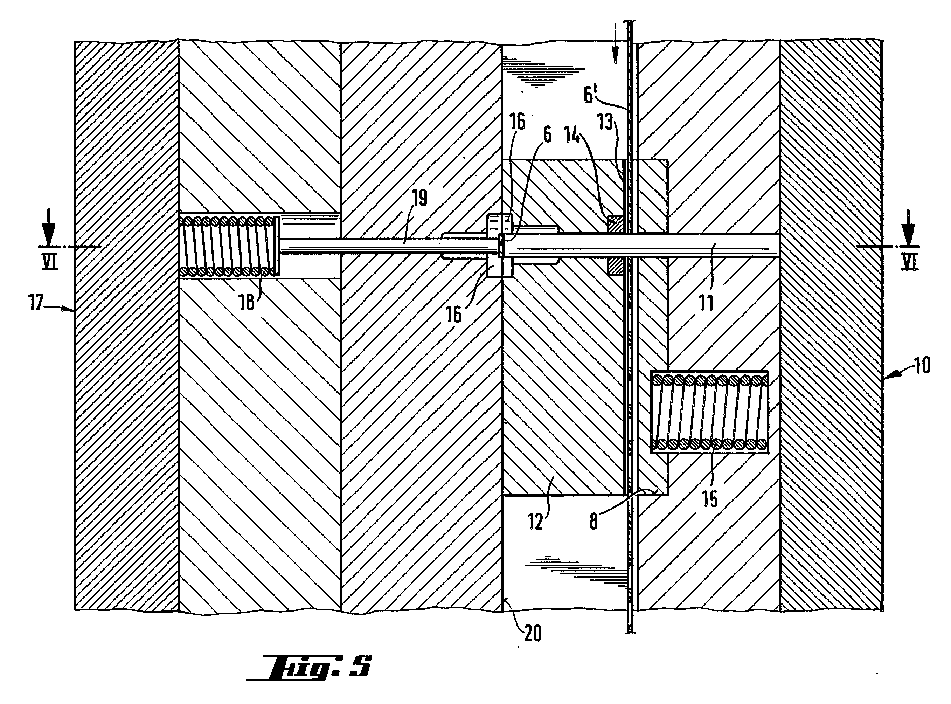

Bei der Detailausführung gemäß Fig. 3 ist die innere Schulter 4 zu einer umlaufenden Ringnut 5 erweitert, so daß der Randbereich 6″ der Filtermembran 6 U-förmig umfaßt wird. In der in Fig. 1 dargestellten Ausführung sind der Einlaß 2 und Auslaß 3 etwa der wirksamen Filterfläche größenmäßig angepaßt.

Durch eine einseitig oder beidseitig flächig angeordnete oder integrierte Drainageschicht 7 in Form eines Vlieses oder Gewebes können dünne und empfindliche Membranfilter bei größeren Filterflächen mechanisch unterstützt werden, wobei der Randbereich der Drainageschicht 7 ebenfalls im Kunststoff des einteiligen Filtergehäuses 1 verankert ist.

Anstelle des in Fig. 1 dargestellten Gehäuses 1 kann dieses auch sehr flach gehalten werden und die Form eines Ringes 1' bilden in dessen Öffnung die Filtermembran 6 im Kunststoff verankert ist und seinerseits in einem umschließenden Gehäuse positioniert werden.

Das Formwerkzeug zur Herstellung besteht aus der feststehenden Werkzeughälfte 10 und der beweglichen Werkzeughälfte 17. Die feststehende Werkzeughälfte 10 weist einen feststehenden Kern 11 auf, der gleichzeitig als Stanzstempel dient. Mit diesem feststehenden Kern 11 arbeitet ein beweglicher Werkzeugeinsatz 12 zusammen, der eine schlitzförmige Membranführung 13, eine Schneidplatte 14 bzw. mit dem Stanzstempel 11 zusammenarbeitende Schneidbüchse und die eine Hälfte des Formnestes 16 aufweist. Der bewegliche Werkzeugeinsatz 12 ist in einer Ausnehmung 8 der Werkzeughälfte 10 geführt und stützt sich auf eine Rückstellfeder 15 in der Ausnehmung ab.

Die bewegliche Werkzeughälfte 17 weist die andere Hälfte des Formnestes 16 und einen auf einer Rückstellfeder 18 sich abstützenden beweglichen Kern 19 zur Membranfixierung auf.

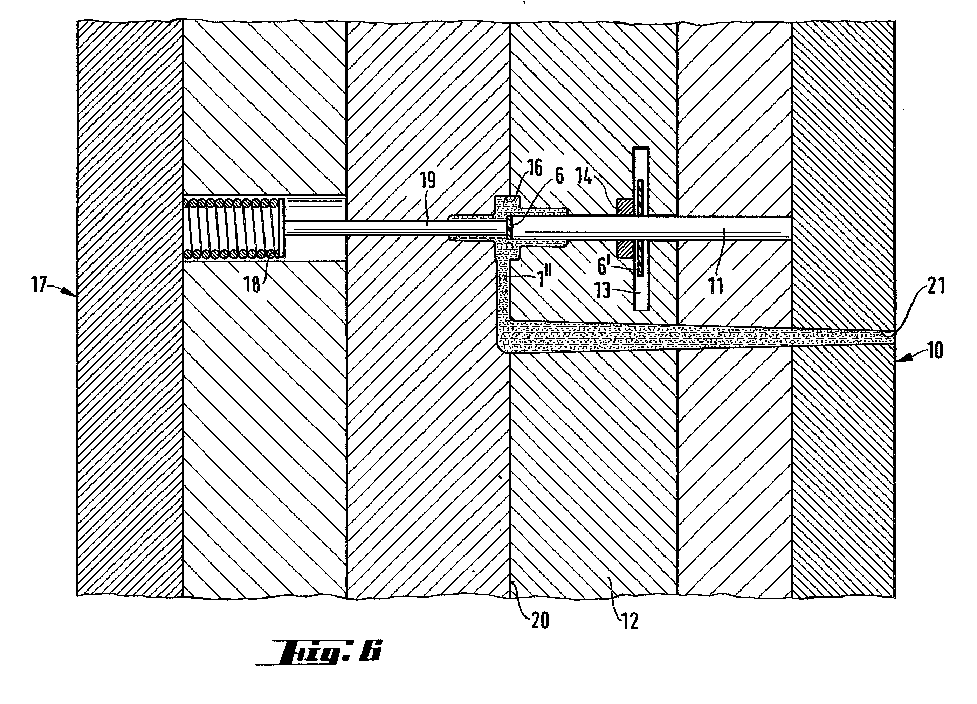

Gemäß Fig. 6 ist in der Formtrennebene 20 und in der feststehenden Werkzeughälfte 10 der Angußkanal 21 für die Zuführung des flüssigen Kunststoffes 12" angeordnet. Gegebenenfalls kann der Angußkanal auch als Heißkanal ganz in der einen Hälfte des Formwerkzeuges angeordnet werden.

Gemäß Fig. 4 wird das Membranfilterband 6' durch die schlitzförmige Membranführung 13 schrittweise hindurchgeführt. Bei der koaxialen Bewegung des beweglichen Werkzeugeinsatzes 12 und der beweglichen Werkzeughälfte 17 in die Schließposition gemäß Fig. 5 wird durch den Lochstempel 11 und die Schneidbüchse 14 ein Membranfilter 6 aus dem Filterband 6' ausgestanzt, durch den Lochstempel 11 und den Gegenkern 19 im Formnest 16 positioniert und anschließend durch den Angußkanal 21 eingespritzte flüssige Kunststoffmasse 1" gemäß Fig. 6 randseitig verankert. Nach Aushärten der Kunststoffmasse 1" erfolgt die Entformung des fertigen Kleinfilters gemäß Fig. 1 und die Weiterführung des Membranbandes 6' innerhalb der Membranführung 13.

In gleicher Weise wird ein Filterband bestehend aus ein-oder beidseitig mit Drainageschicht 7 verstärktem Membranfilter 6 verarbeitet.

Die Fertigung ist überaus rationell und die Verankerung des Membranfilters 6 in der Kunststoffmasse des einteiligen Kunststoffgehäuses 1 leckdicht und sicher. Bei Fertigung unter Reinraumbedingungen verlassen die Kleinfilter das Formnest 16 praktisch partikelfrei. Da die flüssige Spritzgußmasse 1" z.B. aus Polypropylen im Formnest 16 etwa eine Temperatur von etwa 230°C hat und besonders bei kleinen Formnestern 16 und besonders kleinen Formstempeln 11,19 und darauf positionierten Filtermembran 6 die Temperatur der Spritzgußmasse 1" kurzzeitig auf die vorsterilisierte Filtermembran 6 entsprechend ausstrahlt, erfolgt diese Art der Fertigung für die einteiligen Kunststoffgehäuse 1 unter Sterilbedingungen und bezüglich der Filtermembran 6 zumindest keimreduzierend und unter bestimmten Voraussetzungen sogar sterilisierend, was von Vorteil für alle Einsatzbereiche der Filter ist. Gegebenenfalls kann dadurch eine weitere Nachbehandlung der Kleinfilter entfallen.

**Ansprüche**

1. Kleinfilter aus Kunststoff mit einem aus Spritzguß gefertigten Gehäuse, in welchem zwischen einem Einlaß und einem Auslaß eine in ihrem Randbereich leckdicht mit dem Gehäuse verbundene Filtermembran angeordnet ist, dadurch gekennzeichnet, daß das Gehäuse (1) einstückig aufgebaut und die Filtermembran (6) zumindest einseitig am abzudichtenden Randbereich (6") vom nach dem Spritzguß erstarrten Kunststoff überdeckt und in diesem verankert ist.

2. Kleinfilter nach Anspruch 1, dadurch gekennzeichnet, daß das einstückige Gehäuse (1) ein flaches ringförmiges Spritzteil bildet und der Rand der Filtermembran (6) im Kunststoff des Spritzteiles beidseitig verankert ist.

3. Kleinfilter nach Anspruch 1 oder 2, dadurch gekennzeichnet, daß die Filtermembran (6) ein- oder beidseitig durch eine Drainageschicht (7) verstärkt ist, die ebenfalls randseitig im Kunststoff des einstückigen Gehäuses (1) verankert ist.

4. Verfahren zur Herstellung von Kleinfiltern aus Kunststoff mit einem aus Spritzguß gefertigten Gehäuse (1), bei welchem zwischen einem Einlaß (2) und einem Auslaß (3) eine randseitig leckdicht mit dem Kunststoffgehäuse (1) verbundene Filtermembran (6) angeordnet wird, dadurch gekennzeichnet, daß die Filtermembran (6) zwischen zwei gegenläufig bewegbaren Formelementen (11,19) eines Formwerkzeuges (10,17) in einem Formnest (16) derart beidseitig abgestützt wird, daß der abzudichtende Randbereich (6") der Filtermembran (6) zumindest ein seitig freiliegt und vom beim Spritzguß eingebrachten flüssigen Kunststoff (1") überdeckt, in diesem verankert und das verfestigte einstückige Gehäuse (1) mit der integrierten Filtermembran (6) entformt wird.

5. Verfahren nach Anspruch 4, dadurch gekennzeichnet, daß die in das Formwerkzeug (10,17) einzubringende Filtermembran (6) als Band (6') zwischen einem Stanzwerkzeug (11,14) hindurchgeführt und als Stanzteil direkt in das Formwerkzeug (10,17) eingeführt und dort positioniert wird.

6. Verfahren nach Anspruch 4, dadurch gekennzeichnet, daß die in das Formwerkzeug (10,17) einzuführende Filtermembran (6) als Band (6') in einem als Stanzwerkzeug ausgebildeten Teil (12) des Formwerkzeuges (10,17) hindurchgeführt, die Filtermembran aus dem Band (6') ausgestanzt und vom beweglichen Teil (12) des Stanzwerkzeuges (11,12) in das Formnest (16) eingeführt und in diesem an einem Genhalter (19) für die Filtermembran (6) bis zur Entformung im Formwerkzeug (10,17) fixiert wird.

EP 0 328 038 A2

Fig. 2

Fig. 3

Fig. 1

Fig. 4

EP 0 328 038 A2

Fig. 5

**Fig. 6**